(19)

**Europäisches Patentamt**
**European Patent Office**
**Office européen des brevets**

(11) **EP 3 987 170 B1**

(12) **EUROPEAN PATENT SPECIFICATION**

(45) Date of publication and mention
of the grant of the patent:
**15.01.2025 Bulletin 2025/03**

(21) Application number: **20732553.1**

(22) Date of filing: **10.06.2020**

(51) International Patent Classification (IPC):
*F03D 7/02* (2006.01)          *F03D 7/04* (2006.01)
*H02J 3/00* (2006.01)          *H02J 3/38* (2006.01)
*H02P 9/00* (2006.01)

(52) Cooperative Patent Classification (CPC):
**F03D 7/0284; F03D 7/046; H02J 3/001;**
**H02J 3/381; H02P 9/007;** F05B 2270/1033;
F05B 2270/107; F05B 2270/337; H02J 2300/28;
Y02E 10/72; Y02E 10/76

(86) International application number:
**PCT/EP2020/066036**

(87) International publication number:
**WO 2020/254161 (24.12.2020 Gazette 2020/52)**

(54) **FAST FREQUENCY SUPPORT FROM WIND TURBINE SYSTEMS**

SCHNELLE FREQUENZUNTERSTÜTZUNG VON WINDTURBINENSYSTEMEN

SUPPORT À FRÉQUENCE RAPIDE À PARTIR DE SYSTÈMES D'ÉOLIENNE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **21.06.2019 GB 201908897**

(43) Date of publication of application:
**27.04.2022 Bulletin 2022/17**

(73) Proprietor: **The University of Birmingham**
**Birmingham B15 2TT (GB)**

(72) Inventors:
• **ZHANG, Xiao-Ping**
**Birmingham Edgbaston Birmingham B15 2TT**
**(GB)**
• **XUE, Ying**
**Birmingham Edgbaston Birmingham B15 2TT**
**(GB)**

• **ZHAO, Xianxian**
**Birmingham Research Park Vincent Drive**
**Birmingham**
**B15 2SQ (GB)**

(74) Representative: **Marks & Clerk LLP**
**15 Fetter Lane**
**London EC4A 1BW (GB)**

(56) References cited:
**EP-A1- 2 818 693          EP-A1- 3 404 258**
**US-A1- 2009 194 995          US-A1- 2016 040 653**

• **LEE JINSIK ET AL: "Stable Short-Term**
**Frequency Support Using Adaptive Gains for a**
**DFIG-Based Wind Power Plant", IEEE**
**TRANSACTIONS ON ENERGY CONVERSION,**
**IEEE SERVICE CENTER, PISCATAWAY, NJ, US,**
**vol. 31, no. 3, 1 September 2016 (2016-09-01),**
**pages 1068 - 1079, XP011620400, ISSN:**
**0885-8969, [retrieved on 20160822], DOI: 10.1109/**
**TEC.2016.2532366**

**Description**

**Field of Invention**

The invention relates to wind turbine systems, and in particular, fast frequency support methods for implementation by wind turbine systems.

**Introduction**

The proportion of electricity that is generated by wind turbine systems (i.e. the wind power penetration level) in an electricity power grid is increasing. Therefore, wind turbine systems (WTSs) are being designed to provide inertial and frequency response to help regulate the frequency of a power grid. The frequency of a power grid is disturbed when, for example, one or more generators in the grid stop functioning.

Conventionally, wind turbines utilise a Fast Frequency Response method in order to help regulate the frequency of a power grid. In such a method, inertial energy from a rotating wind turbine is used to provide an increase in power to a power grid in order to arrest and restrict a frequency change occurring directly after a frequency disturbance event. Existing systems and methods undesirably result in both a first and second frequency "dip" in the grid during the time immediately after such a frequency disturbance event. The first frequency dip is also known as the frequency nadir.

In addition, conventional methods are not well suited to operation under different wind speeds and wind power penetration levels. In particular, the performance of existing frequency support methods disadvantageously varies under various wind speeds and wind power penetration levels.

The invention is aimed at providing an improved Fast Frequency Support method. LEE JINSIK ET AL: "Stable Short-Term Frequency Support Using Adaptive Gains for a DFIG-Based Wind Power Plant", IEEE TRANSACTIONS ON ENERGY CONVERSION, IEEE SERVICE CENTER, PISCATAWAY, NJ, US, vol. 31, no. 3, 1 September 2016, pages 1068-1079, XP011620400, discloses frequency support using adaptive gains. US2016/040653A1 discloses an inertial control method of a wind turbine. US2009/194995A1 discloses a stabilization system for a power generation system. EP3404258A1 discloses power generation stabilization control systems and methods.

**Summary**

According to a first aspect of the invention there is a method for controlling a wind turbine system connected to a power grid. The method comprises generating a wind turbine control signal based on a power control reference for controlling a power output of a wind turbine; monitoring an electrical frequency of the power grid; and in response to detecting a change in the frequency in the power grid, activating a fast frequency support method. The fast frequency support method comprises adjusting the power control reference (also known as the power reference factor) to cause an overproduction of power by the wind turbine, the overproduction of power causing a transfer of inertial kinetic energy of the wind turbine to electrical power. The power control reference is determined by applying an adaptive gain function to a measurement of a difference in grid frequency from a nominal level.

The adaptive gain improves the performance of the fast frequency support method by enabling the value of gain to vary based on external factors as will be discussed below. The drop in frequency of a grid caused by a frequency disturbance and the rate of change of frequency are reduced. Furthermore, the undesirable frequency second dip is avoided. The frequency security of power systems is improved.

Optionally, the power control reference adjustment causes sufficient overproduction of power to prevent the grid frequency from reducing below a predetermined settling frequency. Further optionally, the rate of change of frequency is decreased. Typically, the settling frequency is tolerable by the grid during the majority of time of operation of the grid. The settling frequency is considered to be a frequency at which it is acceptable for the grid to "settle" at. i.e. a frequency at which the grid could continuously operate at for an extended period after a frequency disturbance without any adverse consequence.

The grid settling frequency that is achieved using the power control reference adjustment is typically advantageously only slightly lower (e.g. within 0.01 Hz) the settling frequency that is achieved using conventional methods.

This is a typical maximum amount by which a grid frequency can deviate from a nominal value. By maintaining the frequency within this boundary, there is no need for the rotation of the wind turbine rotor to return to an optimal level during the fast frequency support method. Instead, the wind turbine rotor can return to optimal speed subsequent to the fast frequency support method being completed and due to the frequency being raised by other "slower" generators in the grid being engaged.

Optionally, the adaptive gain function is at least partially based on a measurement of the real-time speed of the rotor of the wind turbine.

Under a higher wind speed, the ratio of the wind power output over the total power generation of a system is higher. This means that there is a larger frequency drop for the same frequency event if the wind turbine systems do not provide fast frequency support, and there needs to be more overproduction of energy for each WTS to arrest the frequency change. Thus, at a higher wind speed, the adaptive gain causes more inertial kinetic energy to be released from the wind turbine rotor (there must be a higher power control reference).

At a lower wind speed, less kinetic energy is stored in the rotor, thus the adaptive gain will be acceptable which will not cause an over-deceleration of rotor speed and a potentially large loss of wind power capture.

In some cases, conventional systems using a constant gain could cause a constant decline of the rotor speed since the gain is maintained at a high level even when frequency support is not needed. In the disclosed system, the adaptive gain may be gradually decreased with the rotor speed thereby reducing the level of frequency support and avoiding the phenomenon of a continued decline of the rotor speed.

Optionally, the adaptive gain function is at least partially based on one or both of a predefined maximum and minimum rotor speed. Preferable the adaptive gain function is partially based on a predefined minimum rotor speed.

As the rotor speed reduces during the frequency support method, the frequency support capability will reduce. If the rotor speed reduces to a level that is close to the minimum rotor speed, then it is beneficial for there to be no overproduction of power from the wind turbine to ensure that the wind turbine rotor speed does not reduce below the minimum rotor speed.

The adaptive gain function is at least partially based on a wind power penetration level depending on the proportion of power generated by wind turbines in the power grid.

When there is a higher wind penetration level, more wind turbine systems participate in the frequency support method and there is less requirement for overproduction of power for each wind turbine system. Furthermore, the total loss of inertial kinetic energy is larger than if the same gain is used for a lower wind penetration level.

Optionally, the adaptive gain function is at least partially based on one or more system operating conditions.

Optionally, the system operating conditions depend on one or more characteristics of the power grid, the characteristics comprising one or more of the utilisation of fast response energy storage, HVDC links, photovoltaic, and power electronic-based loads (e.g. parked electric vehicles that are connected to the power grid).

If the system includes components enabling fast frequency response then there may be a reduced requirement for fast frequency support to be provided by wind turbine systems and there is a reduced risk of unnecessary over-production of power from wind turbine systems.

Optionally, the fast frequency response method further comprises a secondary control method wherein the frequency of the grid is regulated to the nominal frequency by adjusting control parameters of additional generators connected to the power grid and causing the inertial kinetic energy of the wind turbine to return to the optimal level, optionally, without absorbing power from the grid.

Optionally, the frequency of the grid is regulated to within a deadband of the nominal frequency.

Optionally, the control parameters of additional generators are adjusted if the rotor speed is reduced below the optimal level during the fast frequency support method.

Avoiding absorption of power from the grid means that a second dip in the frequency after a frequency disturbance event is avoided.

Optionally, the power control reference is additionally determined based on a maximum power point tracking power value. Preferably, the power control reference is never less than the maximum power point tracking power value. The wind turbine rotor is normally operated at a maximum power point tracking value and this condition ensures that the wind turbine system seamlessly switches between maximum power point tracking operation and overproduction (frequency support operation).

Optionally, the wind turbine system is controlled using grid forming principles, wherein a power converter of the system is configured to create a voltage frequency at a terminal of the wind turbine system. In examples, the power converter can function in the absence of a synchronous generator.

According to a second aspect of the invention there is a wind turbine system comprising: a wind turbine and a controller. The controller is configured to generate a wind turbine control signal based on a power control reference for controlling a power output of the wind turbine. The controller is further configured to, in response to detecting a change in the frequency in the power grid, adjust the power control reference to cause an overproduction of power by the wind turbine. The overproduction of power causes a transfer of inertial kinetic energy from the wind turbine to electrical power. The power control reference is determined by applying an adaptive gain function to a measurement of a difference in grid frequency from a nominal level.

Optionally, the power control reference causes sufficient overproduction of power to prevent the grid frequency from reducing below a predetermined settling frequency. Typically, the settling frequency is tolerable by the grid during the majority of time of operation of the grid.

Optionally, the controller is configured to receive a measurement of the real-time speed of the rotor for inputting to the adaptive gain function.

Optionally, the adaptive gain function is at least partially based on one or both of a predefined maximum and minimum rotor speed. Preferably, the adaptive gain function is at least partially based on a predefined minimum rotor speed.

The adaptive gain function is at least partially based on a wind power penetration level depending on the proportion of power generated by wind turbines in the power grid.

Optionally, the adaptive gain function is at least partially based on one or more system operating conditions.

Optionally, the system operating conditions depend on one or more characteristics of the power grid, the characteristics comprising one or more of the utilisation of fast response energy storage, HVDC links, photovoltaic, and power electronic-based loads.

Optionally, the generator is a doubly-fed induction generator.

Optionally, the generator is a permanent magnet synchronous generator.

Optionally, the wind turbine system further comprises a power converter connected between the generator and the grid, wherein the controller controls the power output of the wind turbine generator by transmitting the wind turbine control signal to the power converter and the power converter varies an electrical load on the generator based on the control signal

Optionally, the controller is configured to adjust the power control reference based on a maximum power point tracking power value.

Optionally, the wind turbine system is controlled using grid forming principles, wherein a power converter of the system is configured to create a voltage frequency at a terminal of the wind turbine system. In examples, the power converter can function in the absence of a synchronous generator.

In grid forming control, the converter forms its own voltage frequency at the wind turbine system to ensure self-synchronisation, thereby inherently supporting the stability of the grid. During grid-following control, which is also compatible with aspects of this disclosure, the converter does not impose the voltage frequency at the wind turbine system terminal but follows the grid frequency by measuring the frequency of the terminal voltage using a phase-locked-loop (PLL) or similar components.

The following examples are relevant to aspects including either a method or wind turbine system as discussed above.

In examples, the electrical frequency of the power grid is monitored using a phase-locked-loop component or similar components within the converter, and/or, using a generated virtual frequency of the converter. Typically the converter is configured to convert electrical output from the wind turbine to the grid and/or is a power converter connected between the wind turbine and the grid. The electrical frequency of the power grid is advantageously monitored without requiring communication between multiple wind turbine systems.

In examples, adjusting the power control reference (or a power reference factor) causes an immediate and sufficient overproduction of power by the wind turbine to prevent reduction of the grid frequency below the settling frequency without (or with only negligible frequency overshoots and oscillations). In other words, the grid frequency nadir (as will be discussed below) is arrested to be close or within the settling frequency.

In examples, the overproduction of power causes a transfer of inertial kinetic energy from the wind turbine when the wind speed is less than a rated value and/or from the captured wind power from the wind when the wind speed is higher than a rated value.

In examples, the "applying an adaptive gain function" as described above is "adding an adaptive gain function" to an original power reference of maximum power point tracking control to obtain the power control reference. Optionally, the power control reference is additionally determined based on the original power reference.

In examples, the rotor speed of the wind turbine is not returned to an optimal level if it is reduced during the fast frequency support, preferable during a primary control method, in order that extra power does not need to be absorbed from the grid during a period of primary frequency control. If there is a secondary control method, then typically the primary control method takes place before the secondary control method.

In examples, a torque reference generated by the power control reference (power reference factor) dividing the rotor speed is within any mechanical limit of the wind turbine system.

**Brief Description of Drawings**

Figure 1 shows frequency response curves for fast frequency support methods described herein.

Figure 2 is a schematic of a wind turbine system for implementing methods described herein.

Figure 3 is a block diagram of a conventional fast frequency support method.

Figure 4 is a block diagram of an advantageous fast frequency support method disclosed herein.

Figure 5 is a plot showing the relationship between power output and rotational speed of a wind turbine rotor.

Figure 6 shows plots of the results of simulations demonstrating advantages of the disclosed advantageous fast frequency support method.

Figure 7 is a block diagram of an advantageous fast frequency support method implemented using a doubly-fed induction generator (DFIG) based wind turbine system and a grid-following control principle.

Figure 8 is a block diagram of an advantageous fast frequency support method implemented using a doubly-fed induction generator (DFIG) based wind turbine system and a grid-forming control principle.

Figure 9 is a block diagram of an advantageous fast frequency support method implemented using a permanent magnet synchronous motor generator (PMSG) based wind turbine system and a grid-following control principle.

Figure 10 is a block diagram of an advantageous fast frequency support method implemented using a permanent magnet synchronous motor generator (PMSG) based wind turbine system and a grid-forming control principle.

Figures 11a and 11b are plots showing results of simulations demonstrating advantages of the disclosed advantageous fast frequency support method using a PMSG based wind turbine system and a grid-following control principle.

Figures 12a and 12b is a plot showing results of simulations demonstrating advantages of the disclosed advantageous fast frequency support method using a PMSG based wind turbine system and a grid-forming control principle.

**Detailed Description**

This description first discusses a conventional "first" fast frequency support method in order to help explain a second more-advantageous disclosed fast frequency support method. These methods are for supporting the frequency of a power grid immediately after a frequency disturbance occurs in the power grid. Also disclosed is a wind turbine system for implementing these methods.

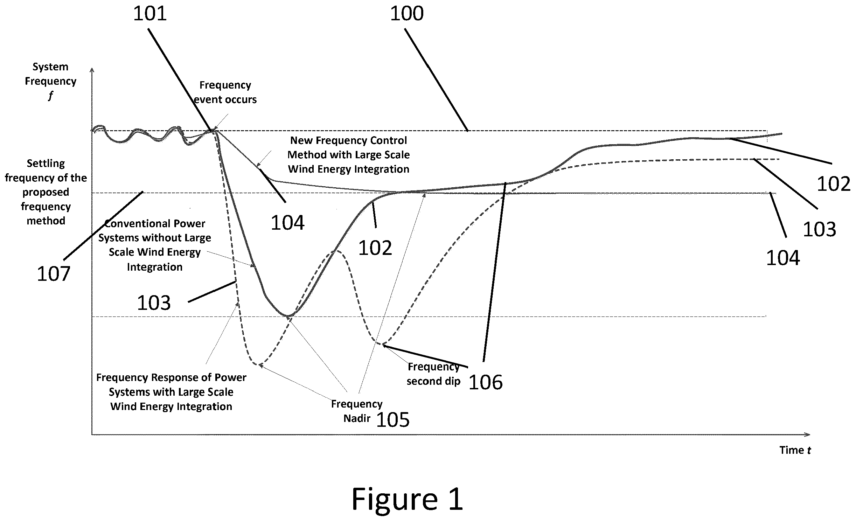

Fig. 1 illustrates the effects of the disclosed fast frequency support methods. Fig. 1 is a plot showing the variation of frequency of a power grid with time during a primary frequency control period which typically lasts over the course of several seconds.

During normal operating conditions, the frequency of the power grid is maintained at a nominal system frequency such as 50 Hz in Europe or 60 Hz in North America. When the Time t corresponds to the point 101 indicated on the shown frequency curve, a frequency event occurs. In the shown example, the frequency event is a sudden decrease in the grid frequency. This is typically caused by an increase in load on the power grid such as by a sudden increase in demand of electricity and/or a generator in the power grid going offline. The decrease in frequency is shown by frequency curves 102, 103, and 104 that each shows a frequency response under different conditions.

In a first instance, frequency curve 102 shows the frequency response that occurs for power grids that have a low wind penetration level, for example, where only 20% of the power is produced by wind turbine systems. In this case, a first fast frequency support method is used. Initially, there is a frequency drop to a so-called frequency nadir 105. As used herein, the term "frequency nadir" relates to the lowest point of a frequency curve occurring after a frequency disturbance. The arresting of the frequency drop at the frequency nadir is caused by inertial kinetic energy being released from the wind turbine system. The rotor of the wind turbine is slowed by releasing inertial kinetic energy from the rotors thereby "over-producing" power that is fed into the grid to support the frequency.

The wind turbine system normally operates at a maximum power point tracking (MPPT) point where it is most efficient. At the MPPT point, the rotor of the wind turbine system rotates at an optimal speed. In the first frequency support method, the speed of the rotor of the wind turbine system is restored to the MPPT point level after several seconds of over-production of power. This restoration process absorbs power from the grid. This absorption of power by wind turbine systems causes a so-called Frequency Second Dip (FSD) in the grid as indicated by reference 106.

In a second instance, dashed curve 103 shows the frequency response that occurs for power grids that have a high wind penetration level (for example, 50% of the power is produced by wind turbine systems), and, when utilising the same first fast frequency response method as in the first method. Similarly to the first instance, there is a frequency nadir 105. The frequency drop is arrested at the frequency nadir 105 by releasing inertial kinetic energy from the wind turbine system.

In the second instance, the speed of the rotor of the wind turbine system is restored to the MPPT level after several seconds of over-production of power to support regulation of the frequency, thereby absorbing power from the grid. It is observed that the resulting FSD 106 is significant and much greater than that for the first instance. This is because significantly more energy is required to be absorbed from the power grid to restore the rotors of wind turbine systems to MPPT levels. This phenomenon is caused by the significantly greater proportion of wind turbine systems generating electricity for the grid.

It is observed from Fig. 1 that both frequency curves 102 and 103 show a frequency second dip 106. The frequency second dip 106 for curve 103 is significantly greater in the second case where there is a greater wind penetration level.

If a large amount of inertial kinetic energy is released to support the grid frequency and the time for restoring the rotors to the MPPT level is short, then a large FSD will occur. Using conventional methodology, in order to avoid a large FSD, the released kinetic energy is limited, which in turn limits the level of frequency support that is available.

In a third instance, frequency response curve 104 shows the frequency response that occurs for power grids having a high wind penetration level, and, when utilising a more advantageous second fast frequency response method as disclosed herein. The frequency nadir 105 is much reduced compared to the first and second instances and is within a so-called "settling frequency" 107. As will be discussed below, this is due to features of the second fast frequency support method such as by increasing the amount of kinetic energy that is released from the wind turbine system by utilising a dynamic gain function.

There is no FSD in the third instance because no energy is absorbed from the power grid to return the wind turbine rotor to the MPPT level. The wind turbine is not restored to the MPPT level during the primary frequency response period. The settling frequency is within the allowable tolerance of frequency variation of a power grid and therefore it is acceptable for the frequency to remain close to the settling frequency for a significant amount of time. The frequency is gradually regulated to the system frequency during a secondary frequency response period such as over the course of several minutes, for example, by increasing the generating power of synchronous generators connected to the power grid to support the frequency. The rotor speed of wind turbine systems will automatically recover with the frequency during the period of secondary frequency control.

In the third instance, the frequency security of the power grid is much improved. Furthermore, the disclosed fast frequency response method can be integrated into existing control systems of wind turbines.

The disclosed fast frequency response method is explained below with reference to a doubly fed induction generator (DFIG) based wind turbine system implementing the method. The disclosed fast frequency response method could also be implemented using other types of wind turbine system such as a permanent magnetic synchronous generator-based wind turbine system. Methods disclosed herein can be implemented using various types of variable speed wind turbine systems such as utilising a squirrel-cage induction generator or wound rotor synchronous generator.

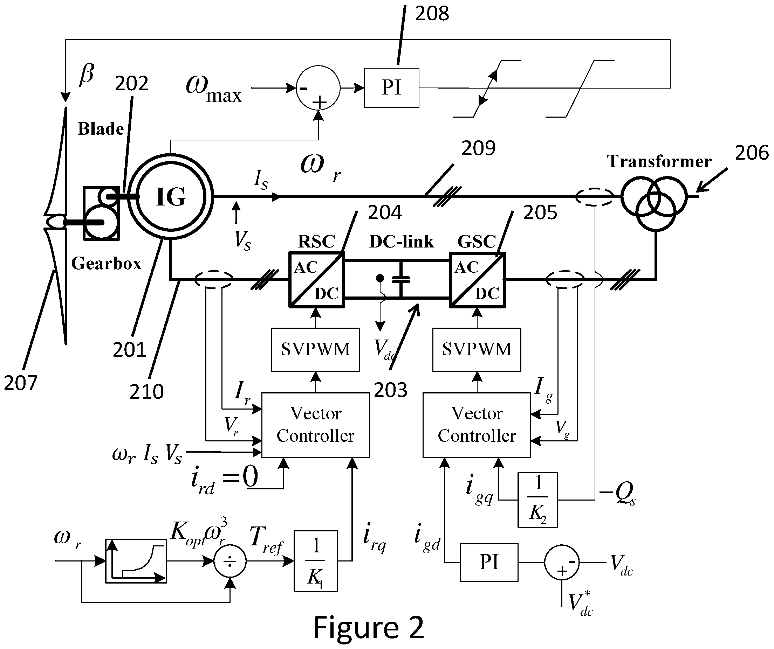

An example DFIG system for implementing the disclosed fast frequency control methods is explained with reference to Fig. 2.

A generator 201 of a DFIG based wind turbine system has two inputs being a) power from the rotor 207 of the wind turbine via rotor input 202 and b) AC input power having a variable frequency and phase via rotor side converter input 210. The AC input power is controlled using the converter 203 to adjust the speed of rotation of the turbine to compensate for changes in the speed of the turbine caused by the environment such as gusts of wind or to implement the method described below. Usually, the rotational speed of a wind turbine is maintained at an optimal operation point (i.e. the MPPT level). Power is output from the generator 201 via line 209 to the grid.

The converter 203 comprises a rotor-side converter (RSC) 204 and a grid-side converter (GSC) 205 connected by a DC link. The RSC and GSC convert input mains power from the grid 206 to the desired power level for inputting to the DFIG generator 201 to ensure that the rotational speed of a wind turbine rotor 207 is maintained at a Maximum Power Point Tracking (MPPT) level. This is known as MPPT control. This is the optimal rotational speed of the rotor for generating electricity most efficiently depending on conditions, in particular, the wind speed and size of the rotor. The RSC 204 is for controlling an AC power input to the DFIG generator 201. The GSC 205 stabilises the DC link voltage between the RSC 204 and GSC 205. The GSC 205 also ensures that there is a zero reactive power output to the grid 206.

A pitch-angle controller 208 is used to limit the rotor speed by controlling a pitch of the rotor blades when wind speed is higher than the maximum.

The following variables are indicated in the system shown in Fig. 2.

$I_r$ is current measured at the rotor side.
$V_r$ is voltage measured at the rotor side (this is an optional input to the Vector controller).
$V_s$, $I_s$ are voltage and current measured at the stator side.
$I_g$, is current measured at the grid side.
$V_g$ is voltage measured at the grid side,

$V_{dc}^*$, $V_{dc}$ is DC-link voltage reference and measured value respectively.

$\beta$: is the pitch angle of the rotor blades.

$\omega_{rmax}$, $\omega_r$: the maximum and real-time rotor speed respectively.

$Q_s$: output reactive power at stator side.

$K_1$, $K_2$ are constants.

The mechanical power $P_M$ captured from wind by the wind turbine, is given by:

$$P_M = \frac{1}{2}\rho\pi R^2 v_w^3 C_\rho(\lambda, \beta) \qquad (1)$$

where $\rho$, $R$, $v_w$, $C_\rho$, $\beta$ and $\lambda$ are the air density, wind turbine rotor radius, wind speed, power coefficient (ratio of actual electric power produced by a wind turbine divided by the total wind power provided by the wind blowing at a specific velocity), pitch angle of rotor and tip-speed ratio (the ratio between the tangential speed of the tip of a rotor blade and the actual speed of wind), respectively. $C_\rho(\lambda, \beta)$ in (1) is calculated using:

$$C_\rho(\lambda, \beta) = 0.517\left[\frac{116}{k} - 0.4\beta - 5\right]e^{-\frac{21}{k}} + 0.0068\lambda \quad (2)$$

where $\frac{1}{k} = \frac{1}{\lambda + 0.08\beta} - \frac{0.035}{\beta^3 + 1}$.

The power generated at the MPPT condition ($P_{mppt}$) is determined by the following equation:

$$P_{mppt} = \frac{1}{2}\rho\pi R^2 \left(\frac{\omega_r}{\lambda_{opt}}\right)^3 C_{\rho max} = K_{opt}\omega_r^3$$

where $\lambda_{opt}$ is the optimal value of $\lambda$, and $C_{\rho max}$ represents the maximum value of $C_\rho(\lambda, \beta)$ when $\beta = 0°$ and $\lambda = \lambda_{opt}$. $K_{opt}$ is the optimal coefficient.

Therefore, in order to operate at the MPPT condition, the converter 203 must regulate the rotational speed of the DFIG generator 201 based on the tip speed ratio $\lambda$.

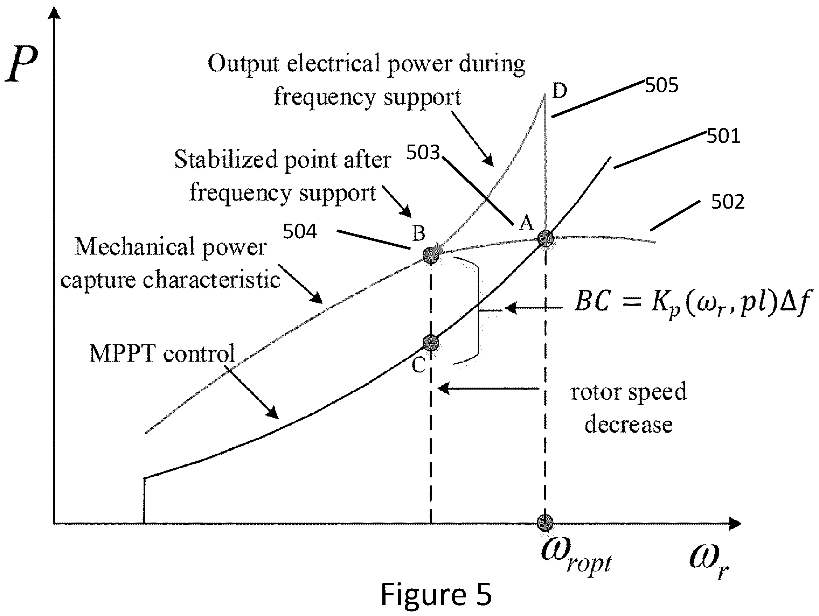

The relationship between $P_{mppt}$, $P_M$, and $\omega_r$ is visualised in Fig. 5. The $P_{mppt}$ for different wind speeds is represented by curve 501 and $P_M$ (mechanical power output) for a particular wind speed is represented by curve 502. Ordinarily, as the wind speed varies, curve 502 will adjust. Power is generated at the MPPT point when the rotational speed of the rotor $\omega_r$ is at the apex of the $P_M$ curve 502 at point 503. As can be observed, a reduction in rotor angular speed $\omega_r$ leads to a reduction in the power generated away from $P_{mppt}$ to, for example, point 504. The change in power output during the disclosed frequency support method with reference to curve 505 will be discussed below.

A pitch angle controller 208 varies the pitch of the blades to ensure that a maximum rated rotor angular speed is not exceeded.

Having described a DFIG system for implementing the methods, the less advantageous first fast frequency support method that would typically provide a frequency response according to frequency response curve 102 of Fig. 1 is now discussed.

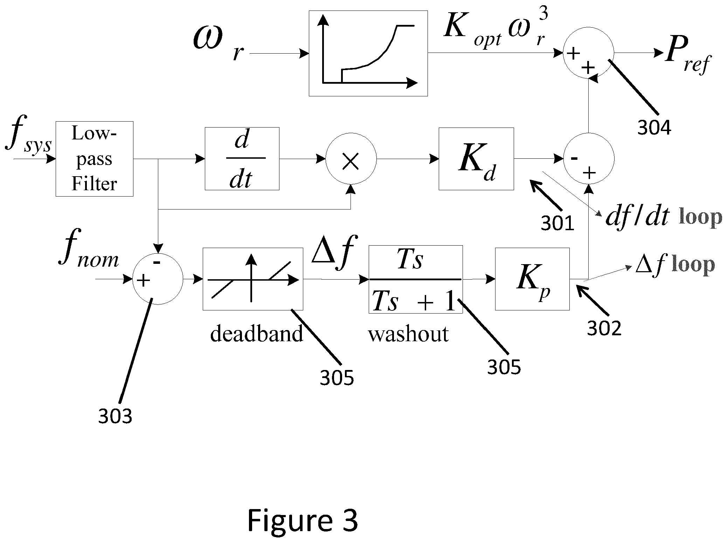

With reference to Fig. 3 there is shown a flow diagram of a method undertaken by a controller. The controller is configured to perform the less advantageous first fast frequency support method providing a frequency response curve such as 103 in Fig. 1. The controller provides an output to the rotor side converter 204 thereby controlling the AC power input to the DFIG generator 201 and regulating the rotational speed of the wind turbine rotor.

The control method takes inputs of $f_{sys}$, $f_{nom}$, $\omega_r$, being the real-time grid frequency, nominal (desired) grid frequency, and real-time rotor speed respectively. The difference between $f_{sys}$ and $f_{nom}$ is $\Delta f$. The output of the control method is $P_{ref}$ being the power control reference that the wind turbine should generate in accordance with a frequency control method. An increase of $P_{ref}$ causes the power converter to increase the electrical load placed on the output of the generator providing an increased torque at a shaft of the rotor 207 of the wind turbine. The increased torque causes the $\omega_r$ of the rotor 207 to reduce so that inertial kinetic energy stored in the rotating masses of the rotor 207 is extracted as electrical power.

Ordinarily, $P_{ref} = P_{mppt}$ when the wind turbine system is operated at the MPPT condition. $P_{ref}$ is output to the rotor side converter in order that the appropriate power input is fed to the DFIG generator 201 in order to control the rotation of the wind turbine blade according to the frequency control method. For example, when a frequency disturbance is detected causing a $\Delta f$, $P_{ref}$ is increased above $P_{mppt}$ thereby using the DFIG to release inertial kinetic energy from the wind turbine system causing the rotors to slow down.

The control method of Fig. 3 can be summarised as follows. There are two loops: a df/dt loop 301 and a $\Delta f$ loop

302.

During the $\Delta f$ loop 302, a difference between $f_{sys}$ and $f_{nom}$ is taken at step 303 to provide a $\Delta f$ component that is processed and eventually added to $K_{opt}\omega_r^3$ at step 304 in order to provide the $P_{ref}$ output. A $\Delta f$ component is caused when there is a frequency disturbance in the grid.

Deadband 305 removes any $\Delta f$ values below a threshold in order to remove noise. The washout component 306 eliminates a DC component of $\Delta f$. In effect, the washout component 306 steadily reduces the $\Delta f$ over a period of time meaning that the output $P_{ref}$ is gradually returned to be equal to $P_{mppt}$ (since the $\Delta f$ is reduced to zero).

$K_p$ is a fixed gain constant and is applied in order to increase the value of $\Delta f$ for increasing $P_{ref}$ after a frequency disturbance event.

During the df/dt loop 301, a fixed gain $K_d$ is applied to a differential of $f_{sys}$. The differential of $f_{sys}$ is subsequently subtracted from the $\Delta f$ loop. Therefore, $P_{ref}$ is adjusted to reduce the rate of change of frequency (ROCOF) which corresponds to the initial gradient of a frequency response curve directly after the frequency disturbance.

In summary, the fixed gains $K_d$ and $K_p$ are used to improve the ROCOF and frequency nadir respectively immediately after a frequency disturbance in the grid by causing inertial kinetic energy to be released from the wind turbine rotor. This is an overproduction of power and causes the rotor to slow down. The washout element reduces the $\Delta f$ component over time and causes the wind turbine rotor to return to the MPPT operating point (i.e. speed up) by absorbing power from the grid.

The inventor has recognised several disadvantages with the frequency support method enabled by the control method illustrated in Fig. 3.

Firstly, the rotor speed will be recovered to the MPPT level due to the washout component 305. In other words, the rotor speed will be sped up due to the return of $P_{ref}$ to $P_{mppt}$ caused by the washout component. Therefore, the power converter 203 transfers power to the DFIG generator 201 from the grid to enable rotor speed recovery. This causes a frequency second dip 106 as illustrated in Fig. 1.

Secondly, the fixed gains $K_p$ and $K_d$ are not suitable when there are varying wind speeds and wind power penetration levels. For example, the wind power penetration level may increase as more wind turbine systems are added to a power grid. Fixed gains are not suitable because the releasable inertial kinetic energy from the wind turbine varies with wind speed and the required level of frequency support for different wind penetration levels is different.

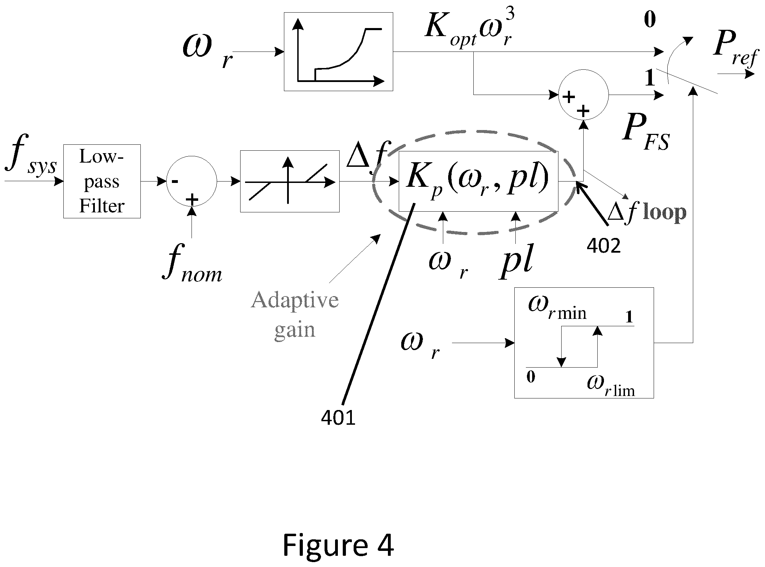

A second (advantageous) frequency support method that results in a frequency response curve 104 as shown in Fig. 1 is now described with reference to Fig. 4.

Objectives of the second frequency support method are:

i) Eliminate the Frequency Second Dip

ii) Maximise the release of kinetic energy to raise the frequency nadir to be close to or equal to a settling frequency and/or to sufficiently decrease the rate of change of frequency (ROCOF).

iii) Ensure similar improvement in the frequency nadir under medium and high wind speeds and different wind power penetration levels.

iv) Ensure stable operation of wind turbine systems under all wind and system conditions.

The second frequency support method is enabled by the control method shown in Fig. 4. This control method does not include a df/dt loop as included in the method described above. This is because the df/dt loop is found to be vulnerable to noise components of $f_{sys}$ which can be high in a power system with high levels of power electronic converters. The loss of function of the df/dt loop can be at least partly compensated for by setting larger gains in the remaining $\Delta f$ loop. System damping is reduced by the supplementary df/dt loop. Finally, it is not necessary to reduce the ROCOF during typical disturbances. For example, in the UK, generation plants are required to be capable of withstanding without tripping a ROCOF up to 1 Hz per second over a rolling 500 millisecond period.

## _Section A: No Rotor Speed Recovery During Primary Frequency Control_

The first two aims (i) and (ii) discussed above are realised by not recovering the rotor speed to the optimal MPPT level during primary frequency control. This is achieved by not including a washout component and the adaptive gain function setting a suitable power control reference.

For reference, the power control reference of the second frequency support method can be described by equation (3): $P_{ref} = K_{opt}\omega^3 + K_p(\omega_r, pl)\Delta f$.

The second frequency support method does not include a washout component and therefore the $\Delta f$ loop 402 does not return to zero over time (in contrast to the scheme of Fig. 3). This means that the rotor speed (and inertial kinetic energy) of the wind turbine system does not recover to the optimal MPPT point during a primary frequency control period. In turn, this means that energy is not absorbed from the power grid and there is no frequency second dip.

The second frequency support method causes significantly more inertial energy to be extracted from the wind turbine system after a frequency disturbance. This allows for the frequency nadir of frequency curve 104 to be significantly improved due to the increase in energy being provided to the grid to support the frequency. In fact, the frequency nadir 105 is as high as a defined settling frequency 107 (see fig. 1) which is an acceptable frequency for the grid to remain at. The frequency can be gradually regulated to the nominal value during a secondary control period by increasing the power output of additional generators connected to the grid. The rotor speed does not need to be recovered artificially and no complicated rotor speed recovery curve needs to be considered or designed.

A power reference of $K_{opt}\omega_r^3$ remains in the controller, whilst frequency support is provided by the $\Delta f$ loop. With reference to Fig. 5, the reasons behind this arrangement are:

- During the primary frequency control period, $K_{opt}\omega_r^3$ (curve 501) decreases due to the reduction of $\omega_r$ caused by capture of inertial kinetic energy. The wind turbine system will automatically stabilise at a power output lower than $P_{mppt}$ after frequency support has ended (point B on curve 502). As an example, this can be observed in Fig. 1 where the frequency response curve 104 is stabilised at the settling frequency 107. With continued reference to Fig. 5, $\omega_r$ reflects the energy level of a wind turbine system. During the primary frequency control period, the electrical power output initially increases to point D as indicated by curve 505 due to the overproduction of power. Subsequently, the electrical power output is determined by equation (3) above and therefore stabilises at point B on the mechanical power capture curve 502. Point B is the sum of $K_{opt}\omega_r^3$ (determined by curve 501) and $K_p(\omega, pl)\Delta f$ (adaptive gain function as discussed below) which is represented in Fig. 5 by the distance between points B and C. Due to the reduction in rotor speed ($\omega_r$), $K_{opt}\omega_r^3$ has reduced (to point C) and $K_p(\omega, pl)\Delta f$ is increased, thereby resulting in a $P_{ref}$ value at point B. Therefore, the reduction of $\omega_r$ forces the output power to reduce along the captured mechanical power curve 502. The stabilised power output is at point B, where the captured mechanical power is equal to electrical output power. The output electrical power is reduced since the rotor speed is slower after the frequency support has ended. It should also be noted that the method of the second frequency support method will automatically take account of changes in wind speed as shown by curve 501 in Fig. 5, which inherits the benefits of MPPT control and will adjust depending on wind speed.

- During the secondary frequency control period, the grid frequency gradually returns to the nominal value. Therefore, mechanical input power from the wind turbine system will become larger than electrical power output causing rotor speed $\omega_r$ to increase. In other words, $\Delta f$ gradually reduces, to zero, causing $K_{opt}\omega_r^3$ to increase to $K_{opt}\omega_{ropt}^3$ at the $P_{mppt}$ level (see point A on Fig. 5). There is no frequency second dip because at each time instant, the little decrease of power output of the wind turbine system due to the slowing decrease of $\Delta f$ will be filled immediately by the increase of additional generators that are utilised for secondary frequency regulation. Therefore, the rotor speed does not need to be recovered artificially.

- Including the power reference of $K_{opt}\omega_r^3$ enables a wind turbine system to automatically and smoothly switch between MPPT operation and frequency support operation.

- In comparison with alternative schemes (not described herein) that do not include an input of the grid frequency $f_{sys}$, the disclosed frequency support scheme of Fig. 4 can automatically adapt to different frequency events and system conditions.

A side effect of the second frequency support method is that the settling frequency is lower than that of the first frequency support method as can be observed from a comparison of the curves 104 and 103 in Fig. 1. However, the inventor has determined that the resulting loss of wind power capture for the second method is minimal (<1% of maximum wind power capture). Furthermore, the settling frequency is only slightly smaller (e.g. within 0.01Hz) compared to the first method.

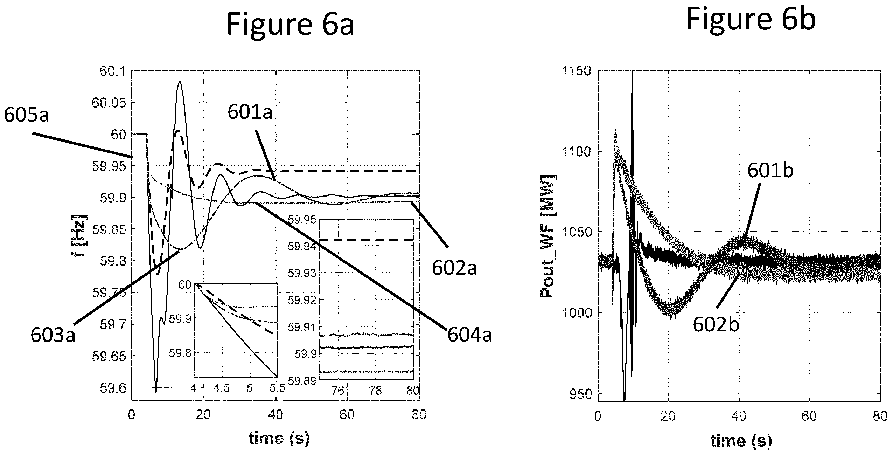

During a simulation comparing the frequency support methods described above, the second frequency support method shows significant improvements over the first frequency support method. In one test, the wind penetration level is set at 35% and the wind speed is 12 m/s. The df/dt loop is removed from the first method, and the gain for the $\Delta f$ loop and the time of the washout component are chosen so that there is a fair comparison. The test results are shown in Figs 6(a-b).

Curves 601(a-b) show results for the first frequency support method. Plots 602(a-b) show results for the second frequency support method.

It is observed from Fig. 6a that the frequency nadir 604a for the second method is raised to be almost the same as the settling frequency 605a being at approx. 59.9 Hz. The corresponding plot for the first method shows a frequency nadir 603a that is significantly less than the settling frequency 605a.

Fig. 6b shows that for the first method over-production of power lasts for less time (approx. 7 seconds) compared to that of the first scheme (approx. 22 seconds). Furthermore, the power output for second method reduces to a lower level than the output before the frequency disturbance.

The rapid reduction in power output shown for the first method is due to the requirement to recover the rotor speed to the $P_{mppt}$ level. For the second method, there is no such requirement.

The test results show that the second method provides sufficient overproduction of power for there to be enough time for other generators in the grid to pick up excess demand in the grid.

Fig. 6a shows that under the second method, the frequency has no oscillations whilst the first method leads to several frequency oscillations and takes a longer time to settle.

The test results also showed (although not displayed in the Figs) that under the second method, there is less oscillation of rotor speed of the wind turbine, which means that the mechanical pressure on the wind turbine system is alleviated. This is especially beneficial for offshore wind turbine systems which have large capacities.

### _Section B: Adaptive Gain_

With reference to Fig. 4, objectives (iii) and (iv) discussed above are realised by implementing an adaptive (or alternatively referred to as "dynamic") gain function 401 which may be an adaptive nonlinear gain function given by:

$$K_p(\omega_r, pl, \boldsymbol{x}) = g(pl, \boldsymbol{x}) * k(\omega_r) \ (4)$$

where $pl$ represents the wind power penetration level, vector x represents m system operating conditions and is given by x= [x_1,x_2,x_3,...,x_m]. These system conditions could include, for instance, whether HVDC links participate in frequency control, and whether fast response energy storage like battery storage participate in frequency control.

In (4) g(pl,x)is used to adapt to different wind power penetration levels and operating conditions. It is a constant under a specific $pl$ and decreases with increasing $pl$. Some example reasons as to why a smaller gain is required at a higher $pl$ are:

1. $\Delta f$ may be bigger at a higher $pl$ even under the same frequency event, which means a smaller gain is needed.
2. With a higher $pl$ more WTSs will participate in the frequency support, so the total loss of wind power capture will be bigger if the same gain is used at a lower $pl$. In practice, the design of $g(pl,\boldsymbol{x})$ depends on frequency response speed of other generators or regulators connected to the grid, and the system requirement of frequency support from a wind farm (WF). Generally, the expression of $g(pl,x)$can be achieved using linear or nonlinear interpolation or fitting functions based on the discrete values of $g(pl)$ under some specific $pl$ obtained through simulations.

In (4), $k(\omega_r)$ is used to achieve similar FN improvement under medium and high wind speeds and ensure stable operation of WTSs and is given by:

$$k(\omega_r) = \sqrt{\omega_r - \omega_{rmin}} \qquad (5)$$

where $\omega_{rmin}$ is the minimum rotor speed.

When the wind speed is higher than the max rated speed of the wind turbine, $\omega_r$ is controlled to remain at $\omega_{rmax}$ by using pitch angle control which is where the pitch of the rotor blades is varied to prevent the rotor blades from exceeding a specific speed. In this case, $k(\omega_r)$ is fixed at $\sqrt{\omega_{rmax} - \omega_{rmin}}$. When the wind speed is lower than the max rated speed of the wind turbine, the wind turbine system is maintained at the optimal operating MPPT point because the adaptive gain $K_p$ will equal zero due to $\Delta f$ being zero prior to a frequency event. The initial $\omega_r$ prior to a frequency event is different under different wind speeds. Therefore, at a higher wind speed $k(\omega_r)$ is bigger causing the adaptive gain $K_p$ to be larger.

$K_p$ depends on $\omega_r$ for the following reasons:

Firstly, under a higher wind speed, the ratio of the wind power output over the total generation of a power grid is higher, thereby causing a higher ROCOF and FN to occur for a frequency disturbance compared to the case where the same frequency disturbance occurs at a lower wind speed. Thus, at a higher wind speed more inertial kinetic energy must be released from the wind turbine, which requires a larger gain.

Secondly, at a lower wind speed, there is less inertial kinetic energy available for release by the rotor. Therefore, a larger gain would cause an over-deceleration of rotor speed and a large loss of wind power capture. A smaller gain is hence appropriate at a lower wind speed.

Equation (5) also shows the stability of a wind turbine system can be ensured.

Firstly, at medium and high wind speeds, over-deceleration of the rotor speed can be avoided when the input wind speed decreases and/or there are consecutive frequency events during a frequency support period. This is because $k(\omega_r)$ decreases with a decrease of $\omega_r$ due to the release of kinetic energy during the frequency support period, thus the support capability will reduce with the decrease of $k(\omega_r)$, which in turn slow down the reduction of the rotor speed.

Secondly, the stability of wind turbine systems is ensured at a low wind speed. This is because if $\omega_r$ is reduced to a level that is close to $\omega_{rmin}$, $k(\omega_r)$ is close to zero, making the power reference of a wind turbine system close to $K_{opt}\omega_r^3$, which stops further frequency support and thus the further decrease of the rotor speed.

$k(\omega_r)$ can also be generalised as the following:

$$k(\omega_r) = (\omega_r - \omega_{rmin})^h \qquad (6)$$

or

$$k(\omega_r) = (\omega_r)^h - (\omega_{rmin})^h \qquad (7)$$

where h is a real number which could be set as a constant and $h \leq 1.0$. The difference among these functions (6), (7) and (5) is the different ratios of frequency support capability under lower wind speeds over that under the rated wind speed. To have a strong frequency support at a lower wind speed under a certain system condition, functions with bigger ratios should be chosen. In such situation, for instance, function $\sqrt{\omega_r - \omega_{rmin}}$ where h = ½ or or function $\sqrt[3]{\omega_r - \omega_{rmin}}$ where h=1/3 can be chosen.

An additional simulation has been conducted in order to show the effect of the adaptive gain implemented in the second method. It has been verified that using a dynamic gain $k(\omega_r)$ can more effectively regulate over-production of power under different wind speeds and wind penetration levels compared to using a fixed gain. For the purpose of the simulation, the only difference between the simulated methods is use of the fixed and dynamic gain. Neither of the simulated methods were configured to use a washout component.

Four simulations were undertaken corresponding to different conditions:

Case 1: wind penetration level = 20%, wind speed = 8.5 m/s
Case 2: wind penetration level = 20%, wind speed = 12 m/s
Case 3: wind penetration level = 50%, wind speed = 8.5 m/s
Case 4: wind penetration level = 50%, wind speed = 12 m/s

At a wind speed of 8.5 m/s and a wind penetration level of 20%, the frequency nadir is similarly improved using fixed and dynamic gains. When the wind speed is increased to 12 m/s there was a better frequency nadir improvement when the dynamic gain is used since more inertial kinetic energy is released from the wind turbine. This is because the dynamic gain is increased at the higher wind speed whilst it is maintained at the same when a fixed gain is used.

It is determined that a fixed gain is no longer suitable at a wind power penetration level of 50%. The fixed gain causes an excessive release of inertial kinetic energy leading to a significant loss of wind power capture and over-deceleration of the rotor speed. This loss of wind power capture further decreases the grid frequency. The decreased grid frequency in turn causes even further decrease of the rotor speed.

Eventually, the rotor speed of the wind turbine system (for the fixed gain case) reduces to the minimum which forces a switch to MPPT operation thereby introducing instability into the system.

However, where the dynamic gain is used, the gain is reduced at the higher wind penetration level thereby reducing the release of inertial kinetic energy and deceleration of the rotor speed. This is necessary to lessen the effect of overproduction on the grid frequency which is amplified due to the higher wind penetration level. The dynamic gain is still sufficiently high to release a large amount of inertial kinetic energy from the wind turbine system to quickly arrest the frequency drop. The gain is gradually decreased with the decrease in rotor speed thereby reducing the level of frequency support thus avoiding the phenomenon of a continued decline of the rotor speed as experienced where there is a fixed gain.

### Further Examples

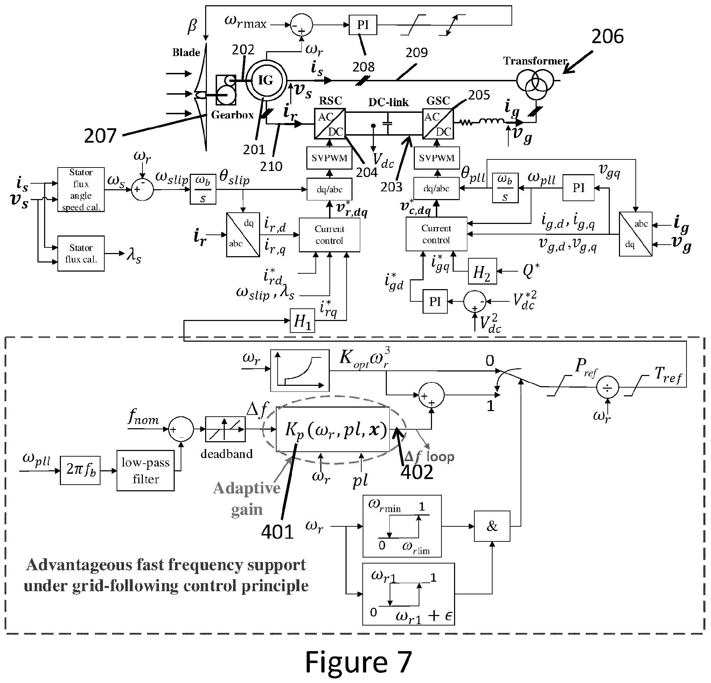

With reference to Figure 7, an example fast frequency response method utilising a DFIG based wind turbine system under a grid-following control principle is explained.

The following variables are indicated in the system shown in Figure 7:

$i_r$ is current measured at the rotor side.

$i_s$, $v_s$ are current and voltage measured at the stator side.

$\lambda_s$ is the calculated stator flux.

$i_g$, $v_g$ are current and voltage measured at the grid side.

$V_{dc}^*$, $V_{dc}$ is DC-link voltage reference and measured value respectively.

$\beta$ is the pitch angle of the rotor blades.

$\omega_{rmax}$, $\omega_r$ are the maximum and real-time rotor speed respectively.

$H_1$, $H_2$ are constants.

$i_{rd}^*$, Q* are d-axis rotor current reference and reactive power reference at the grid side.

$\omega_{rmin}$, $\omega_{rlim}$ are rotor speed limits, to allow a wind turbine system whose wind speed is only above certain value to participate the fast frequency support.

$\omega_{r1}$ is ($\omega_{ropt}$ - $h_1$), where $\omega_{ropt}$ is the rotor speed if the wind turbine system works at MPPT control under current wind speed, $\varepsilon$ is a small positive constant, and $h_1$ is positively proportional to $\omega_{ropt}$. This hysteresis comparator is to limit the amount of reduction of the rotor speed which is related to $\omega_{ropt}$ and avoid stall of the wind turbine system.

$T_{ref}$ is the torque reference which is limited within the mechanical limit of the wind turbine system.

The GSC 205 generates the required reactive power to the grid 206. The frequency of the AC output to the grid from the GSC depends on the phase angle $\theta_{pll}$ that is utilised for a Park transformation (conversion of three phase signals (abc) to direct-current signals (dq)) and an inverse Park inverse transformation (conversion of direct-current signals (dq) to three phase signals (abc)). $\theta_{pll}$ is generated by a phase-locked-loop (PLL) component based on the grid voltage $v_g$. This means that the frequency of AC voltage generated from the GSC 205 is based on the grid frequency. For example, if the grid frequency reduces then the GSC 205 must output a corresponding reduced frequency. As the grid frequency is recovered utilising the principles discussed above, the GSC 205 correspondingly outputs a matching increased frequency to the grid. Thus, the WTS is utilising "grid-following" control principles. The angular speed $\omega_{pll}$ generated by the PLL (effectively a measure of the grid frequency) is used for the frequency feedback signal in the advantageous fast frequency support control as discussed above with respect to Fig. 4. This means that communication between multiple WTSs connected to the grid is not required.

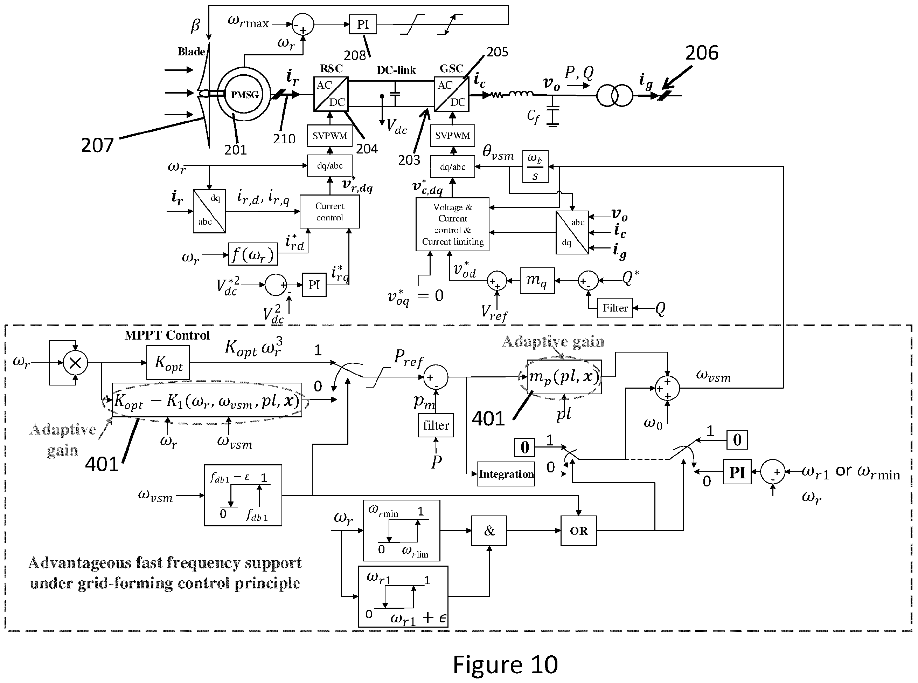

With reference to Figure 10, an example fast frequency response method utilising a PMSG based wind turbine system under a grid-forming control principle is explained.

In order to maximize the wind power capture, $K_{opt}$ in Figure 10 is little smaller than the optimal coefficient $K_{opt}$ in Figure 2 (which is calculated from the wind power capture characteristic to maximize the wind power capture), because the little switching loss of the power converters needs to be accounted when the DC-link voltage and MPPT controls are swapped.

"Grid-forming" means that the power converter forms/creates its own voltage phasor and actively participates in forming/creating the grid voltage and thus can function in the absence of synchronous generator. Use of grid-forming principles by power converters attached to the grid advantageously provides for a more stable grid compared to where power converters utilise grid-following principles. Normally, "grid-forming" converter has the following capabilities: creating system voltage, being distributed and autonomous controlled, contributing to system inertia, black-start, contributing to fault level, acting as a sink to counter harmonics, acting to prevent adverse control system interactions, supporting system survival in case of system splits, and etc..

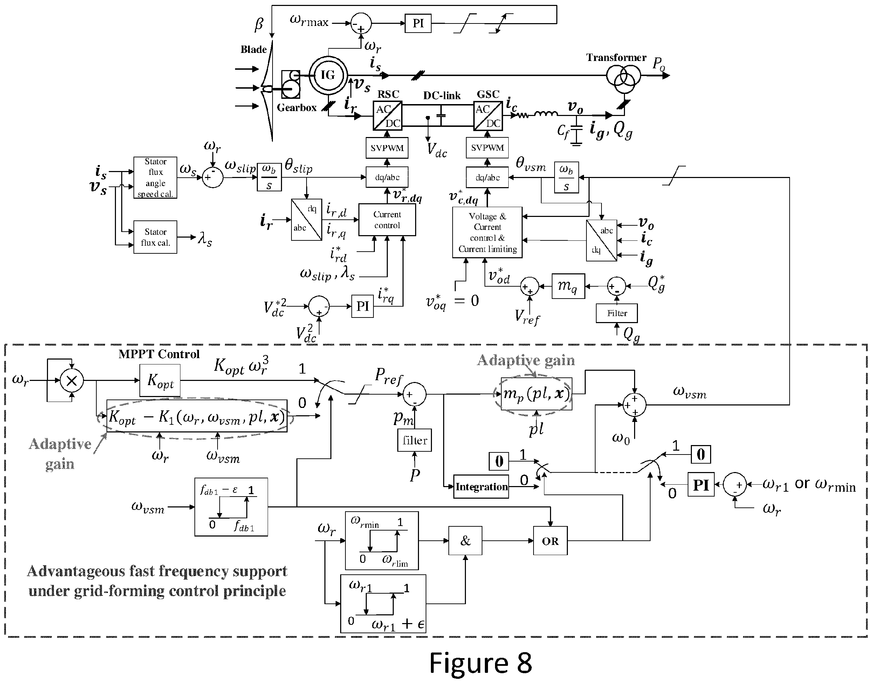

In order to implement both grid-forming control and maximum wind power tracking (MPPT) control, the DC-link voltage is controlled by the rotor side converter (RSC) (also known as the machine-side converter (MSC), while the maximum wind power tracking control ( $K_{opt}\omega_r^3$ ) is implemented in the grid-side converter (GSC) which is under a grid-forming control logic. On the other hand, in Figures 8 and 10, DC-link voltage control (i.e. $V_{dc}^2$ PI controller) and the MPPT control (i.e. $K_{opt}\omega_r^3$ ) can also be controlled by GSC and MSC, respectively, while at the same time implementing grid-forming control principle.

The grid-forming control of GSC 205 typically consists of P-f/Q-V droop control, cascaded voltage and current vector control with feedforward decoupling and compensation terms, Park and Park inverse transformation, and voltage and current limitations. To limit the current of GSC 205, d-axis and q-axis current references being scaled down when the root of the square sum of the both is larger than the maximum current limit, plus anti-windup conditional integration is suggested to be used. The "grid-forming" comes from the principle that the angular phase used for the Park and Park inverse transformation is the virtual angular phase $\theta_{vsm}$, generated by the P-f droop control, instead of through a PLL or similar component, which otherwise call "grid-following" - see the description in relation to Figure 7 above. The virtual angular frequency $\omega_{vsm}$, generated by the P-f droop control, is used for the input of the fast frequency support, so that communication between multiple WTS systems is not needed. It should be noted that Figure 10 only shows one type of grid-forming controls, which can be, e.g. virtual oscillator control, dispatchable virtual oscillator control, synchronous machine emulation. The block diagrams describing the input to the GSC with respect to all of the figures are examples and non-limiting. During the normal situation, $\omega_{vsm}$ is equal to or very close to the grid nominal frequency $\omega_0$. Thus, the output

power of the GSC is $P = p_m = K_{opt}\omega_r^3$, so that the maximum wind power tracking control is realized.

The pitch-angle controller 208 is used to limit the rotor speed by controlling a pitch $\beta$ of the rotor blades when wind speed is higher than a maximum. The mechanical power captured from wind by the wind turbine and wind power capture expression are the same as that expressed in equations (1)(2).

The following variables are indicated in the system shown in Figure 10.

$i_r$ is output current of the PMSG.

$i_c$, $v_o$, are the current and voltage of an LC filter.

$i_g$, P, Q are the current, active and reactive power injected to the grid.

$V_{dc}$ is the DC-link voltage.

$\beta$ is the pitch angle of the rotor blades.

$\omega_{rmax}$, $\omega_r$ are the maximum and real-time rotor speed.

$m_q$ is a constant of the Q-V droop control loop.

$\omega_b$ is the base angular frequency of the grid, i.e. $100\pi$ or $120\pi$ rad/s.

$v_{od}^*$, $V_{dc}^*$, Q* are the related references.

$\omega_{vsm}$ is the virtual angular frequency generated through grid-forming control principle.

For a certain wind power penetration level, in order to fully and timely exploit the kinetic energy of the WTS to provide fast frequency support when the frequency is rather low, and protect the WTS from being unstable, the maximum wind power reference $K_{opt}\omega_r^3$ is modified as

$$P_{ref} = \begin{cases} K_{opt}\omega_r^3, & f_{vsm} > f_{db1} \\ (K_{opt} - K_1)\omega_r^3, & f_{vsm} \leq f_{db1} - \varepsilon \end{cases} \quad (8)$$

where the virtual frequency $f_{vsm} = 2\pi\omega_{vsm}$, $f_{db1}$ is a positive frequency deadband (in this example it is 49.085/50 p.u.), and $\varepsilon$ is a small positive constant.

As seen from in (8), when the frequency reduces below a value during an under-frequency event, i.e. $f_{vsm} \leq f_{db1} - \varepsilon$, $P_{ref}$ becomes smaller as $K_{opt}$ reduces to $(K_{opt}-K_1)$, so that there is less overproduction of power to support frequency. Thus, over-deceleration of the rotor speed is avoided and the WTS is protected from being unstable.

In order to raise the frequency nadir (FN) close to/within the settling frequency and sufficiently decrease the ROCOF by utilizing the kinetic/inertial energy stored in the WTS, most of the kinetic/inertial energy should be released when the frequency is rather low. Thus, in (8), $K_1$ should be decreased when the frequency becomes lower, which is designed as (9)

$$K_1 = \begin{cases} \frac{K_2}{\omega_r - \omega_{rlim}}(\omega_{ropt} - \omega_r), & f_{vsm} > f_{db2} \\ \frac{K_2}{\omega_r - \omega_{rlim}}(\omega_{ropt} - \omega_r) * max[1 + K_3(pl, x)(f_{vsm} - f_{db2}), 0], & f_{vsm} \leq f_{db2} \end{cases} \quad (9)$$

where $\omega_{ropt}$ is the optimal rotor speed if the wind turbine system works at MPPT control under current wind speed, $f_{db2}$ is a second positive angular frequency deadband (e.g. 0.1/50 p.u.), $K_2$ is a positive constant, $K_3(pl, x)$ is a positive constant related to wind power penetration level and power system operating conditions, $\omega_{rlim}$ is a limit of the rotor speed.

Three characteristics in equation (9) should be pointed out here:

1. $K_1$ increases with decrease of the real-time rotor speed $\omega_r$ during the release of the kinetic energy by using ($\omega_{ropt}$ - $\omega_r$) in (9). Thus, ($K_{opt}$ - $K_1$) becomes smaller, so that the overproduction of power of the WTS decreases with decrease of the real-time rotor speed $\omega_r$. In this way, the WTS is protected from being over-deceleration and unstable.

2. When $f_{vsm} \leq f_{db2}$, $K_1$ starts to decrease with the decrease of the frequency $f_{vsm}$, in other words, the WTS begins to accelerate the release of the kinetic energy. This causes most of the kinetic energy released during the frequency to be around the frequency nadir. $max[1 + K_3(pl,x)(f_{vsm} - f_{db2}), 0]$ can ensure smoothly change of $K_1$ when $f_{vsm} \leq f_{db2}$.

3. In (9), the adaptive gain $\dfrac{K_2}{\omega_r - \omega_{rlim}}$ has two functions: (i) It adapts to the change in wind speed since it is different under different wind speeds. (ii) It protects the WTS from being over-deceleration, i.e. ensure the WTS stability. Because it becomes bigger with the decrease of the rotor speed during the fast frequency support period. Then ($K_{opt}$ - $K_1$) decreases and thus the electrical output power of the WTS reduces. Moreover, when the rotor speed is close to the limit value $\omega_{rlim}$, the adaptive gain becomes infinite and thus and thus ($K_{opt}$ - $K_1$) and the electrical output power of the WTS decrease to negative infinites, which means $\omega_r$ will be bigger than $\omega_{rlim}$ and not reach $\omega_{rlim}$.

$K3(pl,x)$ in equation (9) and the droop coefficient $m_p(pl,x)$ in Figure 10 are used to adapt to different wind power penetration levels and power system operating conditions. They are constant under a specific $pl$, and $K_3(pl,x)$ decreases and $m_p(pl, x)$ increases with increasing $pl$, which give weaker frequency support from each WTS. The reason is that with a higher $pl$ more WTSs will participate in the frequency support, so less support from each WTS is required. Moreover, smaller support leads to smaller loss of wind power capture, so the total loss of wind power capture under a higher $pl$ can be maintain reasonable range. In practice, the design of $K_3(pl,x)$ and $m_p(pl,\boldsymbol{x})$ depends on frequency response speed of other generators or regulators connected to the grid, and the system requirement of frequency support from a wind farm (WF). Generally, the expression of $K_3(pl, \boldsymbol{x})$ and $m_p(pl, \boldsymbol{x})$ can be achieved using linear or nonlinear interpolation or fitting functions based on the discrete values of $K_3(pl,\boldsymbol{x})$ and $m_p(pl, x)$ under some specific $pl$ obtained through simulations. Usually, the droop coefficient $m_p(pl,\boldsymbol{x})$ is about in the range of [0.015, 0.035], to ensure the stability of the GSC under grid-forming control principle.

In order to 100% ensure WTS stability during the frequency support period, in Figure 10 in the GSC 205, when the rotor speed is below $\omega_{r1}$, the proportional-integration (PI) control of the rotor speed or the integration of the active power error is added into the virtual angular speed $\omega_{vsm}$, so that the WTS is in constant speed or constant active power control, and does not contribute to grid frequency regulation. In this way, the amount of reduction of the rotor speed is limited, and over-deceleration of rotor speed and a potentially large loss of wind power capture are avoided. In Figure 10, $\omega_{r1}$ is ($\omega_{ropt}$ - $h_1$), where $\omega_{ropt}$ is the optimal rotor speed if the wind turbine system works at MPPT control under current wind speed, $\varepsilon$ is a small positive constant, and $h_1$ is positively proportional to $\omega_{ropt}$.

When grid frequency $\omega_g$ (i.e. $\omega_{vsm}$ since $\omega_{vsm}$ is generally in synchronization with the grid frequency) is within acceptable level, the PI control of the rotor speed or the integration of the active power error is automatically switched off through the hysteresis comparator of the frequency, and the WTS recovers to normal control.

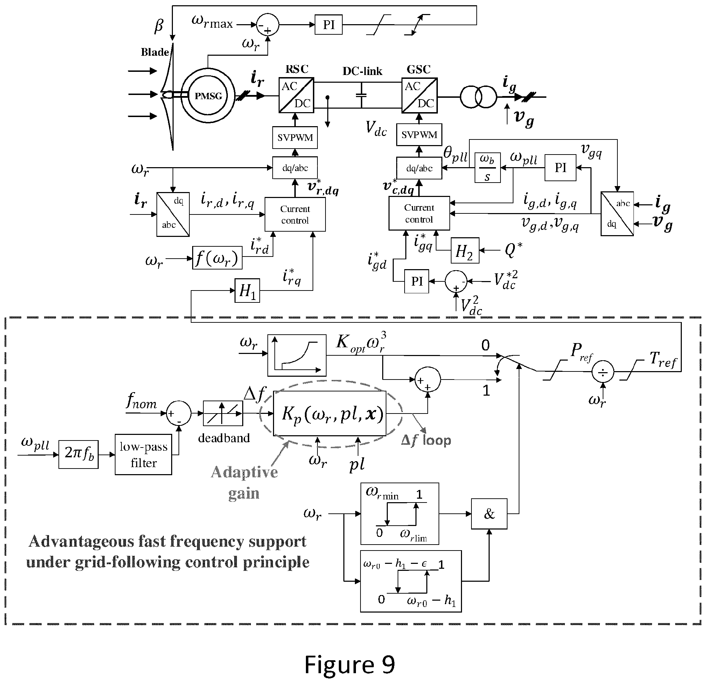

Figures 8 and 9 indicate example systems utilising the principles discussed above and grid forming and grid following methods respectively.

The simulations discussed in cases 1 to 4 above were undertaken with a DFIG using the grid-following control principle. Additional simulations (cases 5 and 6) have been undertaken to investigate the effect of utilising grid-following and grid-forming control principles with a PMSG generator.

Case 5: wind penetration level = 50%, wind speed = 8.5 m/s
Case 6: wind penetration level = 50%, wind speed = 12 m/s

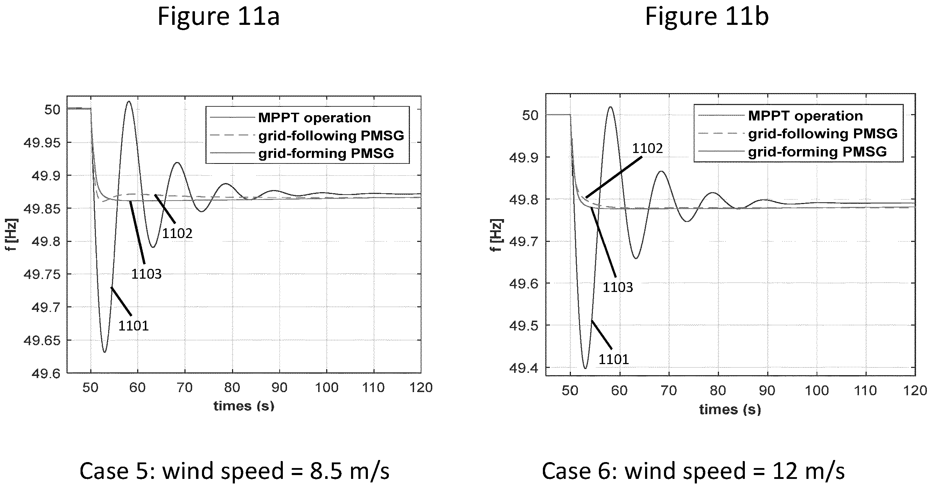

Simulation results for Case 5-6 in Figures 11a and 11b show that with the proposed fast frequency support control in PMSG WTSs under grid-following and grid-forming control principles, the FNs are raised close to/within the settling frequency, which are much higher than that under the MPPT control, and accordingly ROCOF becomes smaller than that under MPPT control. Moreover, the settling frequencies under the proposed fast frequency support control and the MPPT control are very close, with difference around 0.01Hz. Curve 1101 is the frequency response for MPPT operation. 1102 is the frequency response for grid-following fast frequency support using a PMSG generator. 1103 is the frequency response for grid-forming fast frequency support using a PMSG generator.

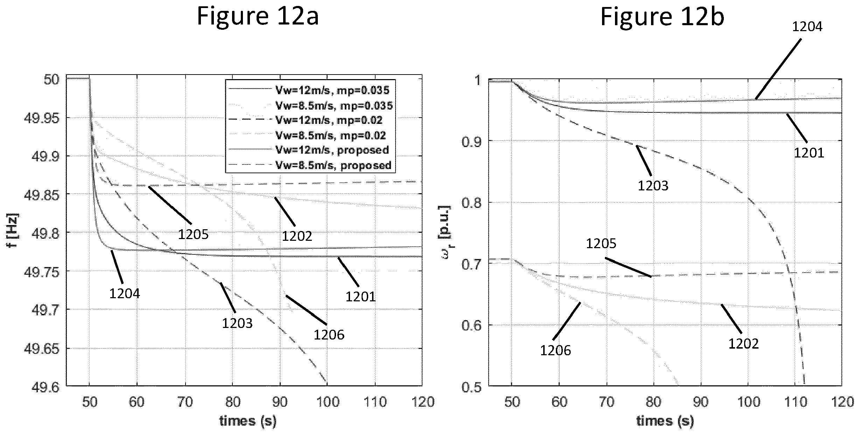

Figures 12a and 12b show the comparison simulation results of a PMSG WTS under grid-forming control principle, using different fixed droop gains and the proposed adaptive fast frequency support gain, under Case 5-6.

Case 5, velocity = 8.5 m/s:

Curve 1202: fixed gain $m_p$ = 0.035
Curve 1206: fixed gain $m_p$ = 0.02

Curve 1205: adaptive gain

Case 6, velocity = 12 m/s:

Curve 1201: fixed gain $m_p$ = 0.035
Curve 1203: fixed gain $m_p$ = 0.02
Curve 1204: adaptive gain

It can be seen from curve 1201 and curve 1204 that with the fixed gain $m_p$=0.035, under the wind speed of 12 m/s the FN is raised as the same as the settling frequency which, however, due to bigger loss of wind power capture is much lower than that of the proposed control. With the fixed gain $m_p$ =0.035 under the wind speed of 8.5 m/s it is seen from the blue and cyan dash lines that the frequency and the rotor speed WTS are still decreasing until the simulation time of 120 s, which means the WTS is already unstable. With fixed gain $m_p$ =0.02, under both 12 m/s and 8.5 m/s wind speeds it is seen that the WTS is unstable. It should be noted that with bigger gain of $m_p$ the frequency support from the WTS will be less. However, too big $m_p$ makes the variation of $\omega_{vsm}$ large, which means the control performance of the grid-forming control is bad. Simulation results confirm this point, which show that when $m_p$ >0.035 there are high frequency oscillations with increasing amplitudes even under a small disturbance.

### *Conclusion*

The disclosed methods enable use of stored inertial kinetic energy of wind turbine systems to improve the frequency nadir after a frequency event in a power grid. In particular, the frequency nadir is improved to be almost equal to or close to the settling frequency. A frequency second dip is avoided. The rate of change of frequency (ROCOF) is sufficiently decreased. Use of a dynamic gain in the method enables favourable frequency performance and system stability under different wind speeds and wind power penetration levels. The methods are mainly disclosed herein in relation to DFIG and PMSG based wind energy generation systems. However, it should be pointed out that the disclosed approaches are applicable to other types of wind energy generation systems, for instance, power electronics-interfaced variable speed wind turbine systems with squirrel-cage induction generator, and wound rotor synchronous generator.

### Claims

1. A method for controlling a wind turbine system connected to a power grid, the method comprising:

   generating a wind turbine control signal based on a power control reference for controlling a power output of a wind turbine (207);
   monitoring an electrical frequency of the power grid;
   in response to detecting a change in the frequency in the power grid, activating a fast frequency support method comprising the steps of;
   adjusting the power control reference to cause an overproduction of power by the wind turbine (207);
   the overproduction of power causing a transfer of inertial kinetic energy from the wind turbine (207) to electrical power;
   wherein the power control reference is determined by applying an adaptive gain function (401) to a measurement of a difference in grid frequency from a nominal level;
   **characterized in that**
   the adaptive gain function (401) is at least partially based on a wind power penetration level depending on the proportion of power generated by wind turbines in the power grid.

2. The method of claim 1 wherein the power control reference adjustment causes sufficient overproduction of power to prevent the grid frequency from reducing below a predetermined settling frequency, and/or causes sufficient over-production of power to decrease the rate of change of frequency of the grid.

3. The method of claim 2 wherein the settling frequency is tolerable by the grid during the majority of time of operation of the grid.

4. The method according to any of claims 2 or 3 wherein the power control reference is adjusted to cause an immediate and sufficient overproduction of power by the wind turbine (207) to prevent reduction of the grid frequency below the settling frequency, preferably without or with substantially no frequency overshoots and oscillations.

5. The method of any preceding claim wherein the adaptive gain function (401) is at least partially based on a measurement of the real-time rotational speed of a rotor of the wind turbine (207), and optionally, wherein the adaptive gain function (401) is at least partially based on one or both of a predefined maximum and minimum rotor speed.

6. The method according to any preceding claim wherein the adaptive gain function (401) is at least partially based on one or more system operating conditions, and optionally, wherein the system operating conditions depend on one or more characteristics of the power grid, the characteristics comprising one or more of the utilisation of fast response energy storage, HVDC links, photovoltaic, and power electronic-based loads.

7. The method according to any preceding claim, wherein, after the fast frequency response method, further comprising a secondary control method wherein the frequency of the grid is regulated to the nominal frequency by adjusting control parameters of additional generators connected to the power grid and causing the inertial kinetic energy of the wind turbine to return to an optimal level, optionally, without absorbing power from the gridand optionally wherein the frequency of the grid is regulated to within a deadband of the nominal frequency.

8. The method according to claim 7 wherein the control parameters of additional generators are adjusted if the rotor speed is reduced below the optimal level during the fast frequency support method.

9. The method according to any preceding claim wherein the power control reference is additionally determined based on a maximum power point tracking power value.

10. The method according to any preceding claim wherein the electrical frequency of the power gird is monitored using a phase-locked loop component within a converter (203) for converting electrical output from the wind turbine (207) to the grid and/or using a virtual frequency of the converter (203).

11. The method according to any preceding claim wherein the overproduction of power causes a transfer of inertial kinetic energy from the wind turbine (207) when the wind speed is less than a rated value and/or from wind power captured by the wind turbine when the wind speed is higher than a rated value.

12. The method according to any preceding claim wherein the applying an adaptive gain function (401) is adding an adaptive gain function (401) to an original power reference of maximum power point tracking control, and optionally, wherein the power reference factor is additionally determined based on the original power reference.

13. The method according to any preceding claim wherein the rotor speed of the wind turbine (207) is not returned to an optimal level if it is reduced during the fast frequency support method, and/or wherein a torque reference generated by the power control reference dividing the rotor speed is within any mechanical limit of the wind turbine system.

14. The method according to any preceding claim wherein the wind turbine system is controlled using grid forming principles, wherein a power converter of the system is configured to create a voltage frequency at a terminal of the wind turbine system.

15. A wind turbine system comprising:

a wind turbine (207) configured to drive a generator (201),
and a controller,
wherein:

the controller is configured to generate a wind turbine control signal based on a power control reference for controlling a power output of the wind turbine generator (201),
the controller is further configured, in response to detecting a change in the frequency in the power grid, to adjust the power control reference to cause an overproduction of power by the wind turbine generator (201), the overproduction of power causing a reduction in the inertial kinetic energy from the wind turbine (207) to electrical power;
wherein the power control reference is determined by applying an adaptive gain function (401) to a measurement of a difference in grid frequency from a nominal level;
**characterized in that**
the adaptive gain function (401) is at least partially based on a wind power penetration level depending on the proportion of power generated by wind turbines in the power grid.

**Patentansprüche**

1. Verfahren zum Steuern eines Windturbinensystems, das mit einem Energienetz verbunden ist, wobei das Verfahren Folgendes umfasst:

   Erzeugen eines Windturbinensteuersignals auf Grundlage einer Leistungssteuerungsreferenz zum Steuern einer Leistungsausgabe einer Windturbine (207);
   Überwachen einer elektrischen Frequenz des Energienetzes;
   als Reaktion auf das Erfassen einer Änderung bei der Frequenz in dem Energienetz, Aktivieren eines schnellen Frequenzunterstützungsverfahrens, das die folgenden Schritte umfasst:

   Einstellen der Leistungssteuerungsreferenz, um eine Überproduktion von Energie durch die Windturbine (207) zu bewirken,
   wobei die Überproduktion von Energie eine Übertragung von kinetischer Trägheitsenergie von der Windturbine (207) zu Elektroenergie bewirkt,
   wobei die Leistungssteuerungsreferenz durch Anwenden einer adaptiven Verstärkungsfunktion (401) auf eine Messung einer Differenz bei einer Netzfrequenz gegenüber einem Nennniveau bestimmt wird,
   **dadurch gekennzeichnet, dass**
   die adaptive Verstärkungsfunktion (401) mindestens teilweise auf einem Windenergie-Durchdringungsniveau in Abhängigkeit von dem Anteil an Energie, die durch Windturbinen erzeugt wird, in dem Energienetz basiert.

2. Verfahren nach Anspruch 1, wobei die Einstellung der Leistungssteuerungsreferenz eine ausreichende Überproduktion von Energie bewirkt, um zu verhindern, dass sich die Netzfrequenz unter eine vorbestimmte Ausregelfrequenz verringert, und/oder eine ausreichende Überproduktion von Energie bewirkt, um die Veränderungsgeschwindigkeit der Frequenz des Netzes zu vermindern.

3. Verfahren nach Anspruch 2, wobei die Einschwingfrequenz während des Großteils einer Betriebszeit des Netzes durch das Netz tolerierbar ist.

4. Verfahren nach einem der Ansprüche 2 oder 3, wobei die Leistungssteuerungsreferenz eingestellt ist, um eine unverzügliche und ausreichende Überproduktion von Energie durch die Windturbine (207) zu bewirken, um eine Verringerung der Netzfrequenz unter die Einschwingfrequenz zu verhindern, vorzugsweise ohne oder im Wesentlichen ohne Frequenzüberschreitungen und -schwankungen.

5. Verfahren nach einem der vorhergehenden Ansprüche, wobei die adaptive Verstärkungsfunktion (401) mindestens teilweise auf einer Messung der Echtzeit-Umdrehungsgeschwindigkeit eines Rotors der Windturbine (207) basiert, und wahlweise, wobei die adaptive Verstärkungsfunktion (401) mindestens teilweise auf einer oder beiden von einer vordefinierten maximalen und minimalen Rotorgeschwindigkeit basiert.

6. Verfahren nach einem der vorhergehenden Ansprüche, wobei die adaptive Verstärkungsfunktion (401) mindestens teilweise auf einer oder mehreren System-Betriebsbedingungen basiert, und wahlweise, wobei die System-Betriebsbedingungen von einer oder mehreren Eigenschaften des Energienetzes abhängen, wobei die Eigenschaften eines oder mehrere von der Verwendung von einer Energiespeicherung mit schnellem Ansprechen, HGÜ-Verbindungen, photovoltaischen, und auf Leistungselektronik basierenden Lasten umfassen.

7. Verfahren nach einem der vorhergehenden Ansprüche, wobei es, nach dem schnellen Frequenzreaktionsverfahren, ferner ein sekundäres Steuerungsverfahren umfasst, wobei die Frequenz des Netzes durch Einstellen von Steuerungsparametern von zusätzlichen Generatoren, die mit dem Energienetz verbunden sind, und Bewirken, dass die kinetische Trägheitsenergie der Windturbine zu einem optimalen Niveau zurückkehrt, auf die Nennfrequenz reguliert wird, wahlweise, ohne Energie aus dem Netz zu absorbieren, und wahlweise, wobei die Frequenz des Netzes auf innerhalb einer Totzone der Nennfrequenz reguliert wird.

8. Verfahren nach Anspruch 7, wobei die Steuerungsparameter von zusätzlichen Generatoren eingestellt werden, falls die Rotorgeschwindigkeit während des schnellen Frequenzunterstützungsverfahrens unter das optimale Niveau verringert wird.

9. Verfahren nach einem der vorhergehenden Ansprüche, wobei die Leistungssteuerungsreferenz zusätzlich auf Grundlage eines Leistungswertes kontinuierlicher Leistungsmaximierung bestimmt wird.

10. Verfahren nach einem der vorhergehenden Ansprüche, wobei die elektrische Frequenz des Energienetzes unter Verwendung einer Phasenregelschleife-Komponente innerhalb eines Umrichters (203) zum Umwandeln einer elektrischen Ausgabe von der Windturbine (207) zu dem Netz und/oder unter Verwendung einer virtuellen Frequenz des Umrichters (203) überwacht wird.

11. Verfahren nach einem der vorhergehenden Ansprüche, wobei die Überproduktion von Energie eine Übertragung von kinetischer Trägheitsenergie von der Windturbine (207), wenn die Windgeschwindigkeit geringer ist als ein Bemessungswert, und/oder von Windenergie, die durch die Windturbine gewonnen wird, wenn die Windgeschwindigkeit höher ist als ein Bemessungswert, bewirkt.

12. Verfahren nach einem der vorhergehenden Ansprüche, wobei das Anwenden der adaptiven Verstärkungsfunktion (401) das Addieren einer adaptiven Verstärkungsfunktion (401) zu einer ursprünglichen Leistungsreferenz einer Steuerung einer kontinuierlichen Leistungsmaximierung ist, und wahlweise, wobei der Leistungsreferenzfaktor zusätzlich auf Grundlage der ursprünglichen Leistungsreferenz bestimmt wird.

13. Verfahren nach einem der vorhergehenden Ansprüche, wobei die Rotorgeschwindigkeit der Windturbine (207) nicht zu einem optimalen Niveau zurückgeführt wird, falls sie während des schnellen Frequenzunterstützungsverfahrens verringert wird, und/oder wobei eine Drehmomentreferenz, die durch die Leistungsteuerungsreferenz erzeugt wird, welche die Rotorgeschwindigkeit teilt, innerhalb einer beliebigen mechanischen Grenze des Windturbinensystems liegt.

14. Verfahren nach einem der vorhergehenden Ansprüche, wobei das Windturbinensystem unter Verwendung von Netzbildungsprinzipien gesteuert wird, wobei ein Leistungsumrichter des Systems dafür konfiguriert ist, eine Spannungsfrequenz an einem Anschluss des Windturbinensystems zu schaffen.

15. Windturbinensystem, das Folgendes umfasst:

eine Windturbine (207), die dafür konfiguriert ist, einen Generator (201) anzutreiben,
und eine Steuerung,
wobei:

die Steuerung dafür konfiguriert ist, ein Windturbinensteuersignal auf Grundlage einer Leistungssteuerungsreferenz zum Steuern einer Leistungsausgabe des Windturbinengenerators (201) zu erzeugen,
die Steuerung ferner dafür konfiguriert ist, als Reaktion auf das Erfassen einer Änderung bei der Frequenz in dem Energienetz, die Leistungssteuerungsreferenz einzustellen, um eine Überproduktion von Energie durch den Windturbinengenerator (201) zu bewirken,
wobei die Überproduktion von Energie eine Verringerung bei der kinetischen Trägheitsenergie von der Windturbine (207) zu Elektroenergie bewirkt,
wobei die Leistungssteuerungsreferenz durch Anwenden einer adaptiven Verstärkungsfunktion (401) auf eine Messung einer Differenz bei der Netzfrequenz gegenüber einem Nennniveau bestimmt wird,
**dadurch gekennzeichnet, dass**
die adaptive Verstärkungsfunktion (401) mindestens teilweise auf einem Windenergie-Durchdringungsniveau in Abhängigkeit von dem Anteil an Energie, die durch Windturbinen erzeugt wird, in dem Energienetz basiert.

**Revendications**

1. Procédé de commande d'un système d'éolienne raccordé à un réseau électrique, le procédé comprenant :

la génération d'un signal de commande d'éolienne sur la base d'une référence de commande de puissance pour commander une sortie de puissance d'une éolienne (207) ;
la surveillance d'une fréquence électrique du réseau électrique ;

en réponse à la détection d'un changement dans la fréquence dans le réseau électrique, l'activation d'un procédé de support rapide de fréquence, comprenant les étapes consistant à :

ajuster la référence de commande de puissance pour provoquer une surproduction d'énergie par l'éolienne (207) ;
la surproduction d'énergie provoquant un transfert d'énergie cinétique inertielle de l'éolienne (207) à une puissance électrique ;
dans lequel la référence de commande de puissance est déterminée en appliquant une fonction de gain adaptatif (401) à une mesure d'une différence d'une fréquence de réseau depuis un niveau nominal ;
**caractérisé en ce que**
la fonction de gain adaptatif (401) est au moins partiellement basée sur un niveau de pénétration de puissance éolienne en fonction de la proportion d'énergie générée par des éoliennes dans le réseau électrique.

2. Procédé selon la revendication 1, dans lequel l'ajustement de référence de commande d'énergie provoque une surproduction d'énergie suffisante pour empêcher que la fréquence de réseau ne soit réduite en deçà d'une fréquence de stabilisation prédéterminée, et/ou provoque une surproduction d'énergie suffisante pour diminuer la vitesse de changement de fréquence du réseau.

3. Procédé selon la revendication 2, dans lequel la fréquence de stabilisation est tolérable par le réseau pendant la majeure partie d'un temps de fonctionnement du réseau.

4. Procédé selon l'une quelconque des revendications 2 ou 3, dans lequel la référence de commande de puissance est ajustée pour provoquer une surproduction d'énergie immédiate et suffisante par l'éolienne (207) pour empêcher une réduction de la fréquence de réseau en-deçà de la fréquence de stabilisation, de préférence sans ou avec sensiblement aucun dépassement ni oscillation de fréquence.

5. Procédé selon l'une quelconque des revendications précédentes, dans lequel la fonction de gain adaptatif (401) est au moins partiellement basée sur une mesure de la vitesse de rotation en temps réel d'un rotor de l'éolienne (207) et facultativement, dans lequel la fonction de gain adaptatif (401) est au moins partiellement basée sur une d'une vitesse de rotor maximale et minimale prédéfinie ou sur les deux.

6. Procédé selon l'une quelconque des revendications précédentes dans lequel la fonction de gain adaptatif (401) est au moins partiellement basée sur une ou plusieurs conditions de fonctionnement de système, et facultativement, dans lequel les conditions de fonctionnement de système dépendent d'une ou de plusieurs caractéristiques du réseau électrique, les caractéristiques comprenant une ou plusieurs parmi l'utilisation d'un stockage d'énergie à réponse rapide, des liaisons CCHT, des charges photovoltaïques, et des charges basées sur l'électronique de puissance.

7. Procédé selon l'une quelconque des revendications précédentes, dans lequel, après le procédé de réponse en fréquence rapide, comprenant en outre un procédé de commande secondaire dans lequel la fréquence du réseau est régulée à la fréquence nominale en ajustant des paramètres de commande de générateurs supplémentaires raccordés au réseau électrique et provoquant le retour d'énergie cinétique inertielle de l'éolienne à un niveau optimal, facultativement, sans absorber de puissance du réseau et facultativement dans lequel la fréquence du réseau est régulée pour être au sein d'une zone morte de la fréquence nominale.

8. Procédé selon la revendication 7, dans lequel les paramètres de commande de générateurs supplémentaires sont ajustés si la vitesse de rotor est réduite en deçà du niveau optimal pendant le procédé de support rapide de fréquence.

9. Procédé selon l'une quelconque des revendications précédentes, dans lequel la référence de commande de puissance est additionnellement déterminée sur la base d'une valeur de puissance de poursuites des points de puissance maximale.

10. Procédé selon l'une quelconque des revendications précédentes, dans lequel la fréquence électrique du réseau électrique est surveillée en utilisant un composant de boucle à phase asservie à l'intérieur d'un convertisseur (203) pour convertir une sortie électrique émanant de l'éolienne (207) au réseau et/ou en utilisant une fréquence virtuelle du convertisseur (203).

11. Procédé selon l'une quelconque des revendications précédentes, dans lequel la surproduction d'énergie provoque un transfert d'énergie cinétique inertielle de l'éolienne (207) lorsque la vitesse de vent est inférieure à une valeur assignée et/ou de la puissance de vent capturée par l'éolienne lorsque la vitesse de vent est supérieure à une valeur assignée.

12. Procédé selon l'une quelconque des revendications précédentes, dans lequel l'application d'une fonction de gain adaptatif (401) consiste à ajouter une fonction de gain adaptatif (401) à une référence de puissance originale de commande de poursuites des points de puissance maximale, et facultativement, dans lequel le facteur de référence de puissance est additionnellement déterminé sur la base de la référence de puissance originale.

13. Procédé selon l'une quelconque des revendications précédentes, dans lequel la vitesse de rotor de l'éolienne (207) n'est pas revenue à un niveau optimal si elle est réduite pendant le procédé de support rapide de fréquence, et/ou dans lequel une référence de couple générée par la référence de commande de puissance divisant la vitesse de rotor est dans une limite mécanique quelconque du système d'éolienne.

14. Procédé selon l'une quelconque des revendications précédentes, dans lequel le système d'éolienne est commandé en utilisant des principes de formation de réseau, dans lequel un convertisseur de puissance du système est configuré pour créer une fréquence de tension à une borne du système d'éolienne.

15. Système d'éolienne comprenant :

   une éolienne (207) configurée pour entraîner un générateur (201),
   et un dispositif de commande,
   dans lequel :

      le dispositif de commande est configuré pour générer un signal de commande d'éolienne sur la base d'une référence de commande de puissance pour commander une sortie de puissance du générateur d'éolienne (201),
      le dispositif de commande est en outre configuré, en réponse à la détection d'un changement dans la fréquence dans le réseau électrique, pour ajuster la référence de commande d'énergie pour provoquer une surproduction d'énergie par le générateur d'éolienne (201),
      la surproduction de puissance provoquant une réduction de l'énergie cinétique inertielle de l'éolienne (207) en puissance électrique ;
      dans lequel la référence de commande de puissance est déterminée en appliquant une fonction de gain adaptatif (401) à une mesure d'une différence de fréquence de réseau par rapport à un niveau nominal ;
      **caractérisé en ce que**
      la fonction de gain adaptatif (401) est au moins partiellement basée sur un niveau de pénétration de puissance de vent qui dépend de la proportion de puissance générée par des éoliennes dans le réseau électrique.

Figure 1

Figure 2

Figure 3

Figure 4

Figure 5

Figure 6b

Figure 6a

Figure 7

Figure 8

Figure 9

Figure 10

Figure 11a

Figure 11b

Case 5: wind speed = 8.5 m/s

Case 6: wind speed = 12 m/s

EP 3 987 170 B1

Figure 12a

Figure 12b

32

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016040653 A1
- US 2009194995 A1

- EP 3404258 A1

**Non-patent literature cited in the description**

- Stable Short-Term Frequency Support Using Adaptive Gains for a DFIG-Based Wind Power Plant. **JINSIK et al.** IEEE TRANSACTIONS ON ENERGY CONVERSION. IEEE SERVICE CENTER, 01 September 2016, vol. 31, 1068-1079